# EUROPEAN PATENT APPLICATION

(11) **EP 4 309 831 A1**
(43) Date of publication of application: **24.01.2024**
(21) Application number: 23185960.4
(22) Date of filing: 17.07.2023
(51) Int. Cl.: B22F 10/28, B22F 12/30, B22F 12/33, B29C 64/153, B29C 64/245, B33Y 10/00, B33Y 30/00, B33Y 40/00, B22F 10/39, B22F 10/25, B23K 9/04, B23K 26/342, B22F 12/00, B22F 12/90, B22F 12/37, B22F 7/06

(54) **SYSTEMS FOR HORIZONTAL ADDITIVE MANUFACTURING AND METHODS THEREOF**

(30) Priority: 15.07.2022 US 202263368609 P
(71) Applicant: Relativity Space, Inc., Long Beach, CA 90815 (US)
(72) Inventor: KONRATH, Kristopher, Long Beach, 90815 (US); WEBB, Steven, Long Beach, 90815 (US); CAMPBELL, Jeffrey, Long Beach, 90815 (US); SWIFT, Matthew, Long Beach, 90815 (US); GLASER, Twain, Long Beach, 90815 (US); MIKA, Jeremy, Long Beach, 90815 (US); GRUBER, Fritz, Long Beach, 90815 (US); GRAY, Justin, Long Beach, 90815 (US); CUMMINGS, John, Long Beach, 90815 (US); WATSON, Bryan, Long Beach, 90815 (US); FREEBERG, Johann, Long Beach, 90815 (US); COTTISS, Edward, Long Beach, 90815 (US); HASHEMI, Saeed, Long Beach, 90815 (US); DESAI, Shivam, Long Beach, 90815 (US); SANSONE, Ellis, Long Beach, 90815 (US); JASIM, Hudhaifa, Long Beach, 90815 (US); DIVERDI, Rocco, Long Beach, 90815 (US); PHAM, Lan, Long Beach, 90815 (US); ISHIGO, Alyssa, Long Beach, 90815 (US); EKMEKJIAN, Nazareth, Long Beach, 90815 (US); AMBROSE, Frederick William, Long Beach, 90815 (US); LEE, Alex, Long Beach, 90815 (US); CHILD, Tim, Long Beach, 90815 (US)
(74) Representative: EIP

(57) **Abstract**

Systems and methods for wire arc additive manufacturing systems that print in horizontal orientations are described. Horizontal WAAM 3D print systems comprise metal 3D print systems in a horizontal orientation with one or more robots operating concurrently on a work piece using one or more wire feeds and a rotating, horizontal build plate.

## Description

### CROSS-REFERENCE TO RELATED APPLICATIONS

The current application claims the benefit, under 35 U.S.C. § 119(e), of U.S. Provisional Patent Application No. 63/368,609 entitled "Systems for Horizontal Wire Arc Additive Manufacturing and Methods Thereof' filed July 15, 2022. The disclosure of U.S. Provisional Patent Application No. 63/368,609 is hereby incorporated by reference in its entirety for all purposes.

### FIELD OF THE INVENTION

The present invention generally regards wire arc additive manufacturing (WAAM) systems that print in horizontal print orientations.

### BACKGROUND OF THE INVENTION

Wire arc additive manufacturing (WAAM) is a production process used to 3D print and/or repair metal parts. WAAM is a process where a metal wire is provided from a tip of a welding robot while heat energy is applied to the metal wire and the heat energy melts the wire to allow it to be layered in the desired shape of the component being manufactured. Print orientation for WAAM is ordinarily vertical, such that each layer is stacked one on another in a height-wise direction (e.g., in a direction from the floor toward the ceiling). Vertical orientations are commonly assumed to be the only viable printing configuration for WAAM, in part, because gravity generally acts on each point of a layer uniformly.

### BRIEF SUMMARY OF THE INVENTION

Systems and methods in accordance with embodiments of the invention implement a horizontal print orientation for WAAM, such that each layer is stacked one on another in a length-wise direction (e.g., generally parallel to the floor). Horizontal WAAM 3D print systems can include a metal 3D printing system or a set of systems in a horizontal orientation with one or more WAAM robots operating concurrently on a work piece using one or more wire feeds and a rotating, horizontal build plate. The robots may be constrained to a linear rail and/or operate from a mobile platform that can be manually and/or autonomously guided.

One embodiment of the invention includes a wire arc additive manufacturing system comprising: a build plate defining a vertically oriented build plane and having a center point and a build axis oriented perpendicular to the build plane, wherein the build plate is configured to rotate on the build axis about center point; and at least one robot comprising at least one print head configured to deposit a molten material onto the build plate in a series of layers disposed along the build axis to form a part.

In another embodiment, the build plate rotates at a speed from 0.5 inch per minute to 600 inch per minute.

An additional embodiment further comprises a positioner, wherein the build plate is attached to the positioner and a motor on the positioner drives the build plate to rotate.

In a further embodiment, the build plate has a circular shape and a diameter from 5 feet to 18 feet.

In yet another embodiment, the print head is placed at a position at 90-degree or 270-degree from a top of the build plate circumferentially around the center point.

In a further yet embodiment, a build plate rotation speed and a print head deposition rate are coordinated such that the print head is at a constant location during printing.

In a further embodiment again, the print head is positioned at one end of an extendable arm of the at least one robot such that the print head extends to reach a desired location to print.

In another further embodiment, the at least one robot is mounted on a rail arranged in a print direction such that the rail moves the at least one robot as the part prints.

In yet another embodiment again, the at least one robot is mounted on a first mobile platform comprising a riser; wherein the at least one robot moves freely horizontally and vertically.

An additional embodiment further comprises a laser tracking system to position the at least one robot at a desired location for printing.

In another embodiment again, the mobile platform is a manually guided vehicle or an autonomously guided vehicle.

Yet another embodiment further comprises a second robot supported on a second mobile platform comprising a riser; wherein the second robot moves freely horizontally and vertically.

In an additional further embodiment, the second robot comprises an end effector assembly configured to attach a tool selected from the group consisting of: a print tool, a weld tool, a machining tool, an inspection tool, and an imaging tool.

Another embodiment further comprises a laser tracking system to position the second robot at a desired location.

In a further embodiment again, the second mobile platform is a manually guided vehicle or an autonomously guided vehicle.

In yet another embodiment, the part has a cylindrical shape or a dome shape.

Another further embodiment comprises a second build plate defining a vertically oriented build plane and having a center point and a build axis oriented perpendicular to the second build plane, wherein the second build plate is configured to rotate on the build axis about center point; and a third robot comprising at least one print head configured to deposit a molten material onto the second build plate in a series of layers disposed along the build axis to form a second part.

In yet another embodiment, the second build plate rotates at a speed from 0.5 inch per minute to 600 inch per minute.

In a further embodiment again, the build plate and the second build plate align along the build axis, the build plane of the build plate faces an opposite direction from the build plane of the second build plate.

In an additional embodiment again, the third robot is mounted on a rail arranged in a print direction such that the rail moves the third robot as the second part prints.

In another further embodiment, the third robot is mounted on a mobile platform comprising a riser; wherein the third robot moves freely horizontally and vertically.

Another embodiment further comprises a positioner, wherein the build plate is attached to one end and the second build plate is attached to an opposite end of the positioner.

In a further yet embodiment, the second part has a cylindrical shape or a dome shape.

Another embodiment includes a method for wire arc additive manufacturing, comprising printing a part with a wire arc additive manufacturing system comprising: a build plate defining a vertically oriented build plane and having a center point and a build axis oriented perpendicular to the build plane, wherein the build plate is configured to rotate on the build axis about center point; and at least one robot comprising at least one print head configured to deposit a molten material onto the build plate in a series of layers disposed along the build axis to form a part.

In a further embodiment, the build plate rotates at a speed from 0.5 inch per minute to 600 inch per minute.

In an additional embodiment, the build plate has a circular shape and a diameter from 5 feet to 18 feet.

In yet another embodiment, the print head is placed at a position at 90-degree or 270-degree from a top of the build plate circumferentially around the centerline.

In another further embodiment, a build plate rotation speed and a print head deposition rate are coordinated such that the print head is at a constant location during printing.

In a further yet embodiment, the print head is positioned at one end of an extendable arm of the at least one robot such that the print head extends to reach a desired location to print.

In yet another embodiment, the at least one robot is mounted on a rail arranged in a print direction such that the rail moves the at least one robot as the part prints.

In another embodiment again, the at least one robot is mounted on a first mobile platform comprising a riser; wherein the first robot moves freely horizontally and vertically.

An additional further embodiment comprises a laser tracking system to position the at least one robot at a desired location for printing.

In an additional embodiment again, the first mobile platform is a manually guided vehicle or an autonomously guided vehicle.

In yet another embodiment, the system further comprises a second robot supported on a second mobile platform comprising a riser; wherein the second robot moves freely horizontally and vertically.

In a further embodiment again, the second robot comprises an end effector assembly configured to attach a tool selected from the group consisting of: a print tool, a weld tool, a machining tool, an inspection tool, and an imaging tool.

In another further embodiment, the system further comprises a laser tracking system to position the second robot at a desired location.

In another embodiment again, the second mobile platform is a manually guided vehicle or an autonomously guided vehicle.

In a further embodiment again, the part has a cylindrical shape or a dome shape.

Another further embodiment comprises printing a second part with the system, wherein the system further comprises a second build plate defining a vertically oriented build plane and having a center point and a build axis oriented perpendicular to the build plane, wherein the second build plate is configured to rotate on the build axis about center point; and a third robot comprising at least one print head configured to deposit a molten material onto the second build plate in a series of layers disposed along the build axis to form the second part.

In an additional further embodiment, the second build plate rotates at a speed from 0.5 inch per minute to 600 inch per minute.

In yet another further embodiment, the build plate and the second build plate align along the build axis, the build plane of the build plate faces an opposite direction from the build plane of the second build plate.

In another embodiment again, the third robot is mounted on a rail arranged in a print direction such that the rail moves the third robot as the second part prints.

In a further embodiment, the third robot is mounted on a third mobile platform comprising a riser; wherein the third robot moves freely horizontally and vertically.

In yet another embodiment, the second part has a cylindrical shape or a dome shape.

Further features and advantages, as well as the structure and operation of various embodiments, are described in detail below with reference to the accompanying drawings. It is noted that the specific embodiments described herein are not intended to be limiting. Such embodiments are presented herein for illustrative purposes only. Additional embodiments will be apparent to persons skilled in the relevant art based on the teachings contained herein.

### BRIEF DESCRIPTION OF THE DRAWINGS

The description will be more fully understood with reference to the following figures. The figures include example embodiments of the invention and should not be construed as a complete recitation of the scope of the invention.
Figures 1A - 1C illustrate a vertical print orientation for WAAM.
Figures 2A - 2D illustrate a horizontal print orientation for WAAM in accordance with an embodiment.
Figure 3 illustrates part retention designs for a horizontal WAAM system in accordance with an embodiment.
Figure 4 illustrates a horizontal meridian print position for horizontal WAAM system in accordance with an embodiment.
Figures 5A - 5B illustrate surface finish and print quality of parts formed in a vertical print orientation and a horizontal print orientation in accordance with an embodiment.
Figure 6A illustrates a horizontal WAAM print cell in accordance with an embodiment.
Figure 6B illustrates a print robot with various end effector assemblies in accordance with an embodiment.
Figure 7 illustrates various parts of a positioner and a build plate of a horizontal WAAM print cell in accordance with an embodiment.
Figures 8A - 8B illustrate a single build plate positioner of a horizontal WAAM print cell in accordance with an embodiment.
Figures 9A - 9B illustrate a dual build plate positioner of a horizontal WAAM print cell in accordance with an embodiment.
Figures 10A - 10B illustrate linear configurations of a horizontal WAAM system in accordance with an embodiment.
Figures 11A - 11C illustrate hybrid linear rail and mobile configurations of a horizontal WAAM system in accordance with an embodiment.
Figures 12A - 12B illustrate a close up view of print robots on mobile platforms in accordance with an embodiment.
Figure 13 illustrates an umbilical strategy for cable management in accordance with an embodiment.
Figures 14A - 14I illustrate a work flow of a hybrid configuration of a horizontal print system in accordance with an embodiment.
Figure 15 illustrates a mobile configuration of a horizontal WAAM system in accordance with an embodiment.
Figure 16 illustrates various configurations of mobile platforms in accordance with an embodiment.

### DETAILED DESCRIPTION OF THE INVENTION

Turning now to the drawings, systems and methods for horizontal WAAM are described. Horizontal WAAM 3D print systems can include a metal 3D print system or a set of systems in a horizontal orientation with one or more WAAM robots operating concurrently on a work piece using one or more wire feeds and a rotating, vertically oriented build plate that is oriented perpendicular to the floor so that structures printed on the build plate extend horizontally, generally parallel to the floor. The robots may be constrained to a linear rail and/or operate from a mobile platform that can be manually and/or autonomously guided.

Additive manufacturing for industrial use may need the ability to print fast and/or at large scale. Prior WAAM systems print in a vertical orientation. In such prior WAAM systems, the build plate is parallel to the floor, so that a printed part extends vertically, in a direction from the floor toward the ceiling. Prior system designers generally viewed such "vertical" printing to be the only viable method of WAAM printing, in part because it allowed gravity to act the same way on every point in a layer for a regular object.

The inventors recognized drawbacks to vertical printing, however. Some of these drawbacks revealed themselves through the inventors' attempts to print large parts at high speed. First, the size of print objects when manufactured in vertical orientations may be limited by the external environment. When printing a tall object (for example, with a height of at least 20 feet), vertical orientation printing may be limited by the print enclosure (e.g., the height of the ceiling). The inventors realized that, to accommodate printing large scale objects, expanding the enclosure vertically or constructing new sites may be needed, which would increase printing cost and time. In addition, they realized that vertical orientation printing may require special facilities (such as a special lift) to access the large-scale printed objects for printing and/or inspection. In addition, when printing in vertical orientations using WAAM, the effect of the force of gravity depends on the nature of the part geometry, such as the presence of an overhang or underlying layer. In particular, they discovered that gravity can affect the melt (weld puddle) and cause unevenness in the build layers. Print parameters may be changed to counter the effect of the gravity force, but it can add complexity to the print processes and may need extra time to achieve good print qualities. Moreover, printing in vertical orientations are typically constrained to one print robot per build on a linear track, leading to longer print time. And they realized that vertically oriented print systems lack the flexibility to accommodate multiple print robots operating simultaneously around the build platform.

In the horizontal WAAM systems described herein, the inventors proceeded contrary to conventional understanding and configured the build plate to be generally perpendicular to the floor, so that a printed part extends horizontally and generally parallel to the floor. Horizontal WAAM 3D print systems, in accordance with many embodiments, enable metallic additive manufacturing of large structures with a higher component throughput than prior WAAM 3D print systems and methods. The inventors unexpectedly discovered that horizontal WAAM systems enable faster print speed, better print qualities, and the flexibility to accommodate large scale objects. They also realized that horizontal printing does not require a tall construction site and removes the constraints associated with vertical print orientations. They realized that horizontal print orientations enable better accessibility to the printed objects and do not require special facilities to access or inspect the printed products.

In several embodiments, horizontal WAAM systems implement rotatable horizontal build plates to provide substrates for printing. In this specification "horizontal build plate" refers to a build plate that is configured for use in a horizontal print system. The build plate itself is not horizontal. Rather, its vertical meridian is perpendicular to the floor so that a part printed off the build plate extends horizontally, parallel to the floor. Print robots can be held at specific print positions due to the rotatable horizontal build plates such that the effect from the gravity force is consistent during printing. Many embodiments include the inventive realization that some horizontal print orientations can achieve better surface finish and print qualities for parts than those printed with vertical print orientations because the gravity force can pull the melt (weld puddle) down in a consistent fashion. Several embodiments provide that multiple robots can be deployed simultaneously during printing. The robots can be supported on fixed rails and/or on mobile platforms controlled manually or autonomously. The horizontal WAAM systems allow multiple concurrent manufacturing operations to be performed simultaneously including (but not limited to) material deposition, tool changes, detailed machining operations, part inspections, and corrections. In a number of embodiments, the horizontal WAAM systems implement mobile specialist robots that enable concurrent machining of secondary features on a work piece while the print operation is in progress. The inventors realized that the size and modularity of the horizontal WAAM 3D print systems can reduce the overall time required to manufacture large-scale metal 3D printed products.

Horizontal WAAM systems in accordance with many embodiments allow large overall volumes of the printed products. In some embodiments, the horizontal WAAM systems can print objects with at least one dimension of at least 15 feet; of at least 16 feet; of at least 18 feet; of at least 20 feet; of at 22 feet; of at least 24 feet; of at least 26 feet. Unlike objects printed with a vertical WAAM system, the size of a part printed with a horizontal WAAM system is not limited by the height of the ceiling in which the printer is located. The horizontally printed objects in accordance with some embodiments can have at least one component with a shape of a rectangular, square, cylinder, circle, eclipse, dome, triangle, polygon, pentagon, hexagon, octagon, cube, sphere, hemisphere, cone, pyramid, and any combinations thereof. Several embodiments provide that the horizontal WAAM systems can operate with an operating volume equivalent to a cylinder of a diameter of at least 50 inches; of at least 55 inches; of at least 1 foot; of at least 5 feet; of at least 10 feet; of at least 15 feet; of at least 20 feet; of at least 25 feet. Many embodiments provide that reduced backlash of the horizontal WAAM systems allow a machine accuracy of about 0.040 inch; or higher than about 0.040 inch; or lower than about 0.040 inch. The reduced backlash can achieve a machine repeatability of lower than about 0.003 inch; or higher than about 0.003 inch. The WAAM systems can include at least one horizontal build plate with a rotational speed of about 5.7 revolutions per minute, or higher than about 5.7 revolutions per minute, or lower than about 5.7 revolutions per minute.

Horizontal WAAM systems have various setups to mitigate environmental effects such as (but not limited to) wind, exhaust, moving subjects (machines or human). Examples of such setups include (but are not limited to) enclosures surrounding horizontal systems, fences, real time motion detection and/or alert systems.

Horizontal WAAM systems have various safety setups: E stop buttons and/or keys can be strategically laid out around horizontal WAAM systems; automatic locks to doors and/or panels; lighting; real time motion detection and/or alert systems. Support structures can be used for safety and seismic prevention.

### Horizontal Printing Orientation

Many embodiments implement a horizontal print orientation for WAAM processes. Contrary to conventional understanding, the inventors realized not only that horizontal printing is a viable alternative to vertical printing but also that it provides benefits over vertical printing in some embodiments. Such benefits over vertical printing for WAAM include (but are not limited to) increased print speed, increased structural stability (reduced "waviness" in final product), and reduced wasted or parasitic mass. Parasitic mass refers to the mass that does not have a beneficial contribution to the function of a component.

Prior WAAM processes print in a vertical orientation, e.g., in a direction from the floor toward the ceiling. The recognized advantages of vertical print include heritage, good wall thickness control/weaving, the implementation of multiple print heads, and relative ease of handling complex geometries. The inventors realized, however, that vertical printing can be difficult to achieve out-of-position printing, such as printing a dome or printing ribs structures inside of a cylinder. They also recognized that part accessibility can be more prone to waviness for vertical printing. They also discovered that vertical printing may have slower print speeds than horizontal print. They recognized that vertical printing can be limited by the height of the print enclosure when printing a tall object, e.g., limited by the height of the ceiling.

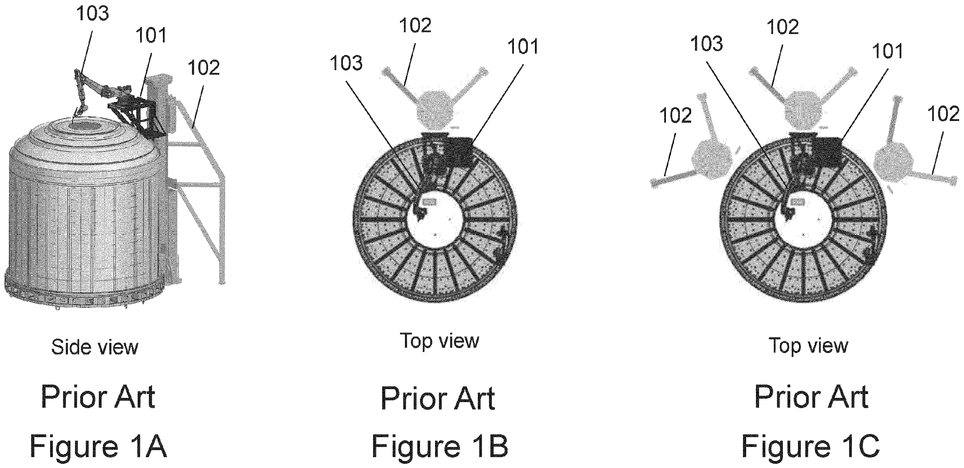

Figures 1A - 1C illustrate a printing system configured to print in a vertical orientation. Figure 1A illustrates a side view of vertical WAAM printing a barrel. Figure 1B illustrates a top view of vertical WAAM printing. Figure 1C illustrates vertical WAAM printing with multiple lifts. In this example, the barrel can have a height of about 18 feet. The maximum possible height in the vertical orientation, however, may be limited by the height of the ceiling of the room in which the print cell is located. In addition, vertical printing may also require a specialty lift and/or gantry 102 for printing, post printing treatment, and/or part inspection access. Moreover, these vertical print orientations may require a transfer mechanism in the perch 101 to achieve optimal robot 103 positioning. Such transfer mechanisms cause the overall structure to grow in size and complexity. As shown in Figure 1C, the vertical print orientation also requires a fixed footprint that may interfere with part removal or with the positioning of additional robots. Because the vertical footprint is fixed, changes to the barrel's (or other structure's) diameter may also cause re-installation of any lift or support structures.

Contrary to the system in Figures 1A - 1C, embodiments of the present invention utilize a horizontal print orientation. Several embodiments implement horizontal WAAM printing to take advantage of the inventive realization that horizontal printing can provide a consistent gravity force at a print position to improve print quality and/or speed. In such embodiments, the print head (also referred as build head) is oriented relative to the build platform in a way such that gravity is utilized to increase deposition rate, better control print layer heights, and/or reduce addition of parasitic mass. The inventors discovered that, due to added stability of the print process, horizontal printing also improves overall print quality. They also realized that horizontal printing, in accordance with many embodiments, can have better part accessibility when printing a large object. When printing an object of at least 20 feet in height, horizontal print (with or without supports) may be limited by the floor length, but not limited by the height of the ceiling. Horizontal print could expand the overall print volume.

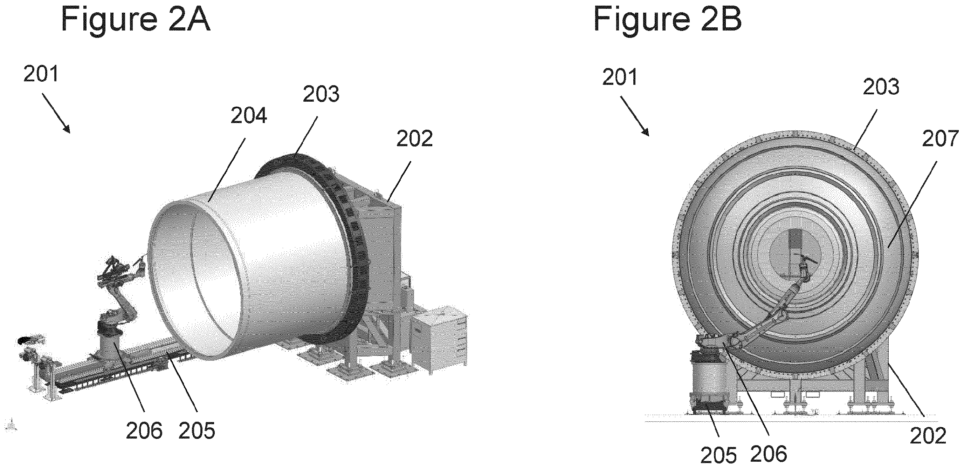

Figures 2A - 2D illustrate embodiments of a horizontal print orientation for WAAM. As shown in Figures 2A and 2B, horizontal print allows easier robot reach and operational accessibility than achievable in the configuration in Figures 1A - 1C. Part inspection access for horizontal print orientation at 18-20 feet may only need a ladder or scissor lift. Figure 2A illustrates a WAAM print robot on a fixed rail horizontally printing a cylinder in accordance with an embodiment. Horizontal WAAM system 201 can include a positioner 202, a build plate (also referred as a surface plate, or a build surface, or a build substrate) 203, a linear rail 205, and a print robot 206. The positioner 202 secures and holds the build plate 203. The rail 205 can be fixed to the floor using fasteners including (but not limited to) bolts, lathes, screws, and/or nails, such that the print robot 206 on the rail moves horizontally but not vertically. The rail 205 can move the print robot 206 horizontally as the print part 204 extends. As discussed in greater detail below, the print robot 206 can be held at a position during print to account for the effect of gravity. The print robot 206 deposits molten metallic materials (such as metallic wires, metal alloy wires, aluminum alloy wires, 5XXX series aluminum alloy wires, and the wires described in U.S. Patent Application No. 17/929,558, filed September 2, 2022, which is incorporated herein by reference) on to the build plate 203. As the molten materials cool and solidify, the part 204 is formed in a layer by layer fashion. The build plate 203 rotates during print so the print robot 206 can be held at a constant location. In Figure 2A, a cylindrical barrel 204 is deposited on the build plate 203. As can be appreciated, a variety of shapes and geometries can be printed using horizontal WAAM systems as appropriate to the requirements of specific applications in accordance with various embodiments of the invention.

Figure 2B illustrates a WAAM print robot horizontally printing a dome structure in accordance with an embodiment. Horizontal WAAM system 201 can include a positioner 202, a build plate 203, a linear rail 205, and a print robot 206. The positioner 202 secures and holds the build plate 203. The rail 205 can be fixed to the floor such that the print robot 206 on the rail moves horizontally as the print part 207 extends. The print robot 206 can extend its arm and/or twist its wrist according to the geometry of the print part 207 while being fixed on the linear rail 205. As discussed in greater detail below, the print robot 206 can be held at a position during print to account for the effect of gravity. The print robot 206 deposits molten metallic materials onto the build plate 203. As the molten materials cool and solidify, the part 207 is formed in a layer by layer fashion. The build plate 203 rotates during print so the print robot 206 can be held at a constant location. In Figure 2B, a dome 207 is deposited on the build plate 203. As can be appreciated, a variety of shapes and geometries can be printed using horizontal WAAM systems as appropriate to the requirements of specific applications in accordance with various embodiments of the invention.

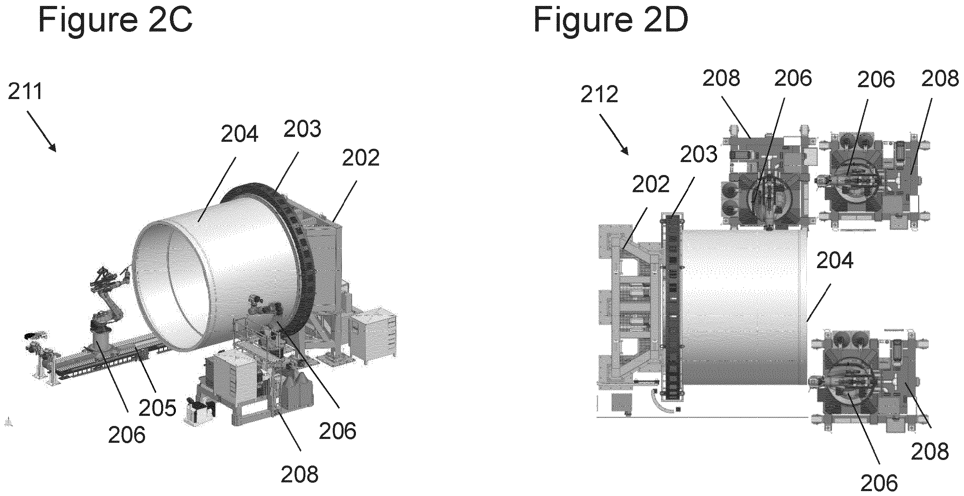

Horizontal WAAM print orientation, in accordance with several embodiments, allows for the use of mobile platforms to allow for improved robot positioning with reduced mechanical complexity relative to vertical print orientations. Figure 2C illustrates WAAM print robots horizontally printing a cylinder (barrel) in accordance with an embodiment. Horizontal WAAM system 211 can include a positioner 202, a build plate 203, a print robot 206 on a linear rail 205, and a print robot 206 on a mobile platform 208. The positioner 202 secures and holds the build plate 203. The robots 206 can be operated on a fixed rail 205 and/or on a mobile platform 208 controlled manually or automatically. The print robot 206 on the fixed rail 205 can move horizontally as the print part 204 extends. The print robot 206 on the mobile platform 208 can move freely in horizontal and vertical directions. The mobile platform 208 controlled print robot 206 provides flexibility during print. The mobile platform 208 can include a riser that can move the print robot 206 vertically. The mobile platform 208 can include locating system such as (but not limited to) laser calibration systems and/or locating systems using physical markers, to move the print robot 206 to desired locations of the print part 204. The robots can be moved to specific locations where additional printing, machining, polishing, part removal, and/or any other processes may be needed. The mobile platform 208 can be useful when printing a part that includes complex geometries and/or printing additional geometries onto a part. The print robots 206 on a rail 205 and on mobile platform 208 can be held at a position during print to account for the effect of gravity. The build plate 203 rotates during print so the print robot 206 can be held at a constant location. Although two print robots are illustrated in Figure 2C, as can be appreciated, a variety of number of print robots on fixed rails and a variety of number of print robots on mobile platforms can be incorporated in horizontal WAAM systems as appropriate to the requirements of specific applications in accordance with various embodiments of the invention. In Figure 2C, a cylindrical barrel 204 is deposited on the build plate 203. As can be appreciated, a variety of shapes and geometries can be printed using horizontal WAAM systems as appropriate to the requirements of specific applications in accordance with various embodiments of the invention.

Horizontal WAAM print orientations in accordance with some embodiments also enable higher robot density per print cell than achievable with vertical print orientations. Figure 2D illustrates multiple mobile WAAM print robots horizontally printing an object in accordance with an embodiment. Horizontal WAAM system 212 can include a positioner 202, a build plate 203, and print robots 206 on mobile platforms 208. The positioner 202 secures and holds the build plate 203. The robots 206 can be operated using mobile platforms 208 that are manually controlled (e.g., manually guided vehicles (MGVs)) and/or autonomously controlled (e.g., autonomously guided vehicles (AGVs)). The print robots 206 on the mobile platform 208 can move freely in horizontal and vertical directions. The horizontal footprint is modular via mobile platforms 208 for better access for procedures including (but not limited to) additional printing, machining, polishing, and/or part removal. The horizontal footprint can be variable with MGVs and/or AGVs. In several embodiments, because they are not constrained by a horizontally extending rail, MGVs can achieve improved robot poses selected for printing certain features. The mobile platform 208 can include a riser that can move the print robots 206 vertically. The mobile platform 208 can include locating system including (but not limited to) laser calibration systems and/or locating systems using physical markers, to move the print robots 206 to desired locations of the print part 204. Although three print robots are illustrated in Figure 2D, as can be appreciated, a different number of print robots on mobile platforms can be incorporated in horizontal WAAM systems as appropriate to the requirements of specific applications in accordance with various embodiments of the invention.

Thermal stresses can cause about 0.5 inches deflection in vertical and/or horizontal print orientations. An about 18-foot diameter cylinder at about 0.300-inch wall thickness and printed to about 18 feet in length, horizontally mounted to a theoretically infinitely rigid surface, deflects about 0.005 inch. Deflection caused by the riser, the tabletop, the positioner, etc.) adds an additional about 0.045 inch of deflection, for a total horizontal deflection of about 0.05 inch. Additional supports are not necessarily required to compensate for such deformation. Changing print parameters or build parameters can change print part wall thickness such that the stiffness of the part can be modified. Several embodiments may correct such mild deformations by controlling the build parameters.

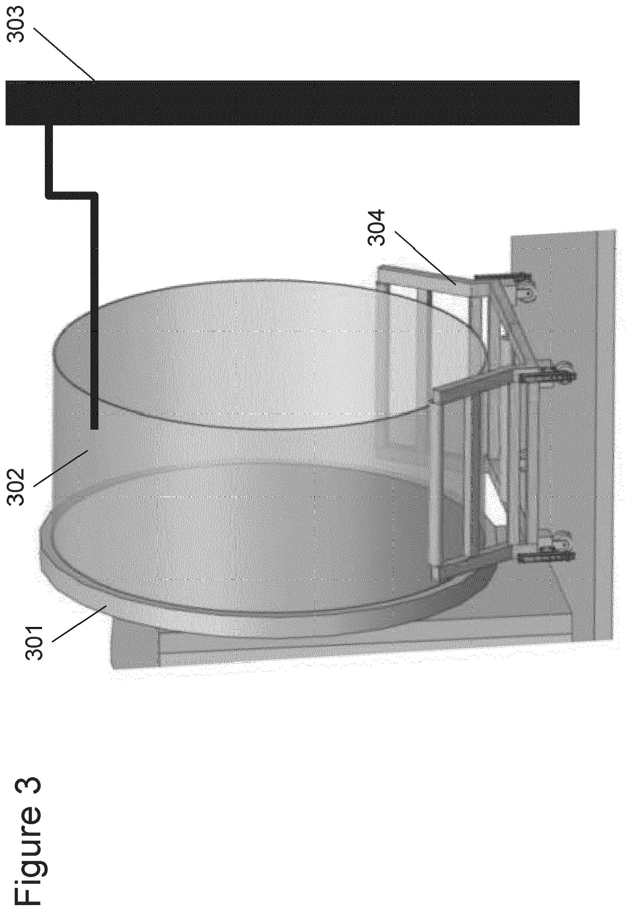

In several embodiments, however, part retention designs may be utilized with horizontal printing, either instead of selecting appropriate build parameters or in conjunction with selecting appropriate build parameters. Some embodiments use external support systems including (but not limited to) carts, stands, fork lifts, scissor lifts, and/or crane lifts, to support print parts. Various sizes of supporting systems can be used to support the print parts depending on a variety of attributes of the print parts such as (but not limited to) sizes, weights, geometries, strengths, and any combinations thereof. In some embodiments, supporting systems can be used to support the print parts during print. In certain embodiments, carts can be used to support print parts in case they may suffer a failure and fall from the build plate. Such supporting systems are not necessarily serving as structural supports, but rather a safety measure or catastrophic failsafe. Figure 3 illustrates a horizontally print part with support systems in accordance with an embodiment. A print part 302 can be printed on a build surface 301. The print part 302 can be of large size, for example, at least 15 feet in diameter. For safety concerns and/or to avoid damage, support systems such as fork lifts 303 and/or wheeled carts 304 can be used to provide additional support for the part. Different types of support systems can be engaged for a print part at the same time, or only one type of support system can be used.

### Horizontal Meridian Print Position

During horizontal printing, the force of gravity may induce a variable effect on weld puddles at each circumferential position around a cylindrical part. Such circumferential variability is typically not present in vertical printing systems and a reason horizontally was not generally thought to be a viable alternative to vertical printing. One challenge to increasing print speed in horizontal metal 3D printing is compensating for the variable gravity effects. For example, if all other print parameters are held constant in a horizontally oriented metal 3D print system, a print head located 180-degrees circumferentially from the top of a cylindrical build plate may produce a cylindrical product with a thicker wall than a print head located 90-degrees from the top of the build plate.

In order to overcome variable gravity effect on print parts, horizontal WAAM print systems in accordance with many embodiments position one and/or more print heads at about 90-degrees from the highest point on the build plate, when the build plate is oriented with the vertical meridian facing straight up from the floor (that is, the "3 o'clock" position, if the build plate is conceptually analogized to the face of an analog clock mounted on a wall and facing straight up), at about 270-degrees (the "9 o'clock" position), and/or at about 90- and about 270-degrees from the top of the build plate circumferentially around the build plate's centerline and normal to the build plate's build surface. The described print head locations (3 o'clock position and/or 9 o'clock position) are referred to individually and collectively as "horizontal meridian" print position(s) below. The inventors discovered that the horizontal meridian print positions can improve print stability by aligning the weld direction with gravity, enable higher deposition rate, improve surface finish, and reduce overall time required to complete a metal 3D printed product. The horizontal meridian position allows WAAM printing for large scale cylinders and/or other symmetrical parts created by rotating the build plate.

In many embodiments, horizontal WAAM print systems include rotatable build plates. Horizontal meridian systems can print cylindrical parts of various radiuses while maintaining constant print parameters because the effect of gravity on the weld puddle remains constant at each radial position in horizontal orientation. Some embodiments may use multiple print heads. Print heads can be positioned at different positions. Print heads on fixed rails can be positioned at points along the horizontal meridian so that the print head is located at the 9 o'clock and/or the 3 o'clock position on the build plate. Print heads on mobile platforms can be positioned on the horizontal meridian and/or moved to any desired locations. Print parameters of each print head can be modified and optimized at each position to address the difference in gravity effects. Print parameters such as (but not limited to) travel speed and/or wire feed speed, can be modified to achieve a desired thickness to address gravity effects. In a vertical orientation, these types of variable radius operations may require modification to the print thermal parameters which decreases part throughput.

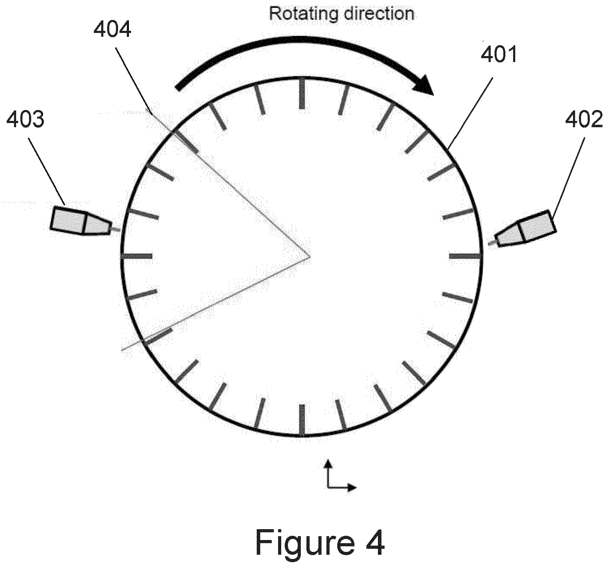

Figure 4 illustrates a horizontal meridian print position for horizontal WAAM print systems in accordance with an embodiment of the invention. The build plate 401 can rotate in a clockwise direction or in a counterclockwise direction. Figure 4 illustrates a rotatable build plate 401 rotating in a clockwise direction to facilitate the print on the horizontal meridian, e.g., at the 9 o'clock position. Weld torches 402 and 403 are part of print heads and can deposit molten metallic materials onto the build plate 401. The horizontal meridian print position includes at least one weld torch (or print head and/or print robot) positioning at about 90-degrees 402, or at about 270-degrees 403, or at about 90 and about 270-degrees 402 and 403 from the top of the build plate circumferentially around the build plate's centerline and normal to the build plate's build surface. Although weld torches are held at about 90- and/or about 270-degrees position, it can be appreciated that a small range of locations as illustrated in 404 (about 15 degrees north and about 15 degrees south) are also part of the horizontal meridian print position(s). The build plate can rotate while the print head is held at a horizontal meridian position.

As can be appreciated, a horizontal meridian print position may be a desirable print position for cylindrical parts such as (but not limited to) barrels. Other print positions can be implemented when printing other shapes of print parts in order to minimize irregularities caused by gravity force effects. Some embodiments use a horizontal meridian print position and other print positions when printing dome-like shapes including (but not limited to) a dome of a launch vehicle.

Several embodiments provide the inventive realization that the horizontal meridian print position can lead to better print quality than is possible in vertical print orientation. The inventors discovered that a horizontal meridian print position improves print quality by utilizing the force of gravity to pull the melt (weld puddle) down relative to the build direction. In such embodiments, the build quality of finished parts may be improved vis-à-vis vertical printing because in a vertical orientation, the melt pool is variably deformed causing unevenness in the build layers, whereas in a horizontal build orientation, the force of gravity at the horizontal meridian acts on the melt pool in a constant fashion leading to a smoother and more consistent build. Moreover, the constant orientation of the build relative to gravity, and thus constant weld parameters, obtained when printing in an orientation on the horizontal meridian in horizontal embodiments allows for more facile builds of parts that otherwise may experience variable gravitational forces when formed in a vertical orientation, such as domes or other overhanging or unsupported parts.

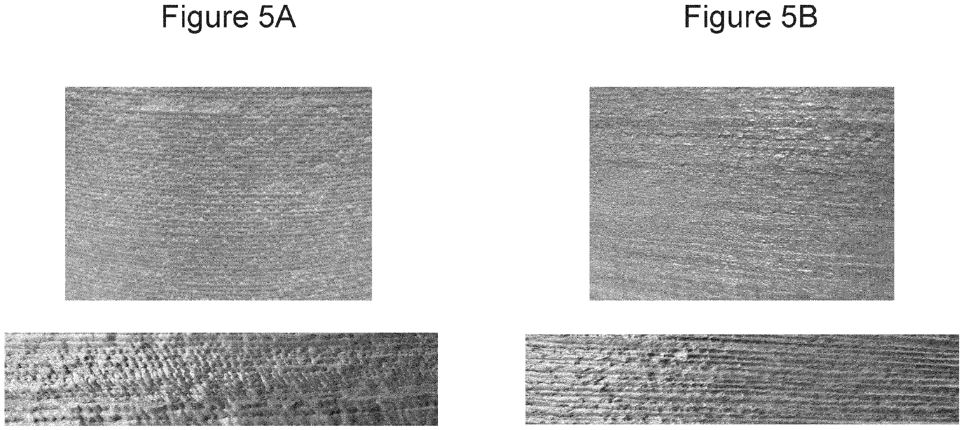

Figure 5A illustrates the surface finish of an object printed vertically in accordance with an embodiment. Figure 5B illustrates the surface finish of an object printed with at a horizontal meridian printing position. The horizontal printed surface is smoother and has fewer build inconsistencies when compared to the vertically printed surface.

### Rotatable Build Plate

In many embodiments, build plates rotate to facilitate horizontal printing such that print robot (and/or print torch) can be held at constant print locations. In several embodiments, rotation speed and/or rotation rate of build plates are coordinated with deposition rate of print robots during horizontal printing. Higher build plate rotation rate can achieve a faster deposition rate of materials. Some embodiments select optimal build plate rotation rate based on deposition rate of print robots. Several embodiments select optimal deposition rate of print robots based on build plate rotation rate. Build plates can be held on positioners. In certain embodiments, driver systems of the positioners control rotation rate of build plates. Positioners can have at least one motor in the driver system to control rotation rate. Rotation rate of build plates can be selected to achieve optimal deposition rate of metallic materials and/or ensure print quality during horizontal printing. Rotation rate should be compatible with various parameters of the driver system such as (but not limited to) torque and/or gear ratio, to maintain steady operation of the build plate.

Build plates can rotate at a rate from about 0.5 inch per minute (ipm) to about 600 ipm. Examples of build plate rotation rate can include (but are not limited to) from about 0.5 ipm to about 1 ipm; or from about 0.5 ipm to about 2 ipm; or from about 0.5 ipm to about 3 ipm; or from about 0.5 ipm to about 4 ipm; or from about 0.5 ipm to about 5 ipm; or from about 0.5 ipm to about 6 ipm; or from about 0.5 ipm to about 7 ipm; or from about 0.5 ipm to about 8 ipm; or from about 0.5 ipm to about 9 ipm; or from about 0.5 ipm to about 10 ipm; or from about 0.5 ipm to about 20 ipm; or from about 0.5 ipm to about 30 ipm; or from about 0.5 ipm to about 40 ipm; or from about 0.5 ipm to about 50 ipm; or from about 0.5 ipm to about 60 ipm; or from about 0.5 ipm to about 70 ipm; or from about 0.5 ipm to about 80 ipm; or from about 0.5 ipm to about 90 ipm; or from about 0.5 ipm to about 100 ipm; or from about 0.5 ipm to about 200 ipm; or from about 0.5 ipm to about 300 ipm; or from about 0.5 ipm to about 400 ipm; or from about 0.5 ipm to about 500 ipm; or from about 2 ipm to about 600 ipm; or from about 2 ipm to about 500 ipm; or from about 2 ipm to about 400 ipm; or from about 2 ipm to about 300 ipm; or from about 2 ipm to about 200 ipm; or from about 2 ipm to about 100 ipm; or from about 2 ipm to about 90 ipm; or from about 2 ipm to about 80 ipm; or from about 2 ipm to about 70 ipm; or from about 2 ipm to about 60 ipm; or from about 2 ipm to about 50 ipm; or from about 2 ipm to about 40 ipm; or from about 2 ipm to about 30 ipm; or from about 2 ipm to about 20 ipm; or from about 2 ipm to about 10 ipm; or from about 2 ipm to about 9 ipm; or from about 2 ipm to about 8 ipm; or from about 2 ipm to about 7 ipm; or from about 2 ipm to about 6 ipm; or from about 2 ipm to about 5 ipm; or from about 2 ipm to about 4 ipm; or from about 2 ipm to about 3 ipm; or from about 4 ipm to about 100 ipm; or from about 4 ipm to about 90 ipm; or from about 4 ipm to about 80 ipm; or from about 4 ipm to about 70 ipm; or from about 4 ipm to about 60 ipm; or from about 4 ipm to about 50 ipm; or from about 4 ipm to about 40 ipm; or from about 4 ipm to about 30 ipm; or from about 4 ipm to about 20 ipm; or from about 4 ipm to about 10 ipm; or from about 10 ipm to about 100 ipm; or from about 20 ipm to about 100 ipm; or from about 30 ipm to about 100 ipm; or from about 40 ipm to about 100 ipm; or from about 50 ipm to about 100 ipm; or from about 10 ipm to about 20 ipm; or from about 10 ipm to about 30 ipm; or from about 10 ipm to about 40 ipm; or from about 10 ipm to about 50 ipm; or from about 10 ipm to about 60 ipm; or from about 10 ipm to about 70 ipm; or from about 10 ipm to about 80 ipm; or from about 10 ipm to about 90 ipm; or from about 10 ipm to about 100 ipm.

Different rotation rates can be selected for build plates of various diameters. In some embodiments, build plates of about 18 feet in diameter can rotate at a rate from about 2 ipm to about 600 ipm; or from about 2 ipm to about 400 ipm; or from about 2 ipm to about 200 ipm; or from about 2 ipm to about 100 ipm. In certain embodiments, build plates of about 5 feet in diameter can rotate at a rate from about 0.5 ipm to about 200 ipm; or from about 0.5 ipm to about 150 ipm; or from about 0.5 ipm to about 100 ipm.

### Horizontal WAAM Print Cells

Many embodiments implement horizontal WAAM print cells to achieve horizontal printing. The WAAM horizontal printing can print large objects of various sizes and shapes. The printed objects in accordance with several embodiments can have one dimension of at least 16 feet; of at least 18 feet; of at least 20 feet; of at 22 feet; of at least 24 feet; of at least 26 feet. The horizontally printed objects in accordance with some embodiments can have at least one component with a shape of a rectangular, square, cylinder, circle, eclipse, dome, triangle, polygon, pentagon, hexagon, octagon, cube, sphere, hemisphere, cone, pyramid, and any combinations thereof. A horizontal WAAM cell can include (but is not limited to) a riser, a positioner, a build plate (or a horizontal build plate, or a build surface, or a turntable, or a surface plate, or a build substrate), and at least one WAAM printer (or a print robot).

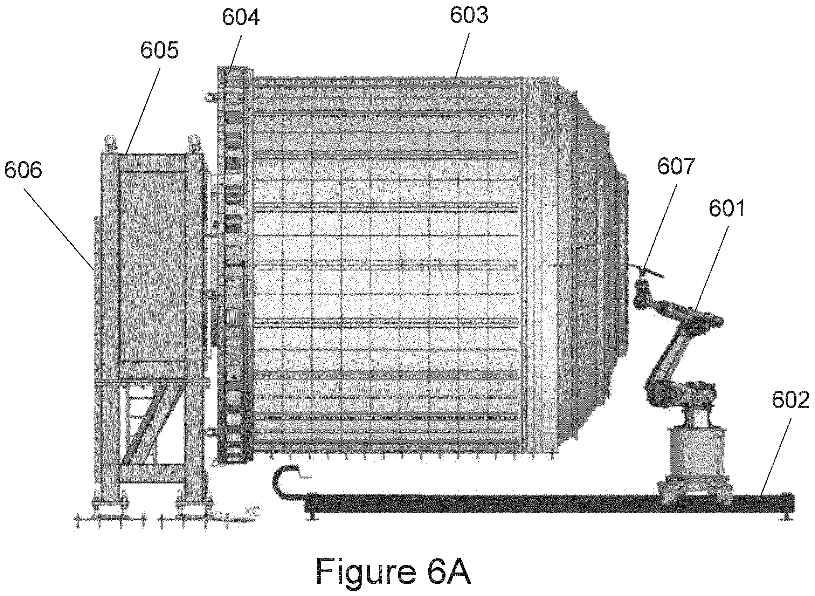

Figure 6A illustrates a horizontal WAAM print cell in accordance with an embodiment of the invention. A WAAM 3D print robot 601 can be controlled on a fixed rail 602. The horizontally printed part 603 can be supported on a build plate 604. The printed part can have a cylindrical body and a dome top. The build plate 604 can be held with a positioner 605. The positioner and the build plate can be raised above ground level by the riser 606.

Weld torch 607 is attached to the print robot 601. As can be appreciated, spindles of print robots have tool change capabilities and can be attached with a variety of tools such as (but not limited to) print heads, print torches, weld torches, machining tools, cameras, sensing devices, monitoring devices, and/or imaging devices. The spindle may have minimum quantity lubrication (MQL), temperature sensors, and/or pneumatic lock/unlock capabilities. Many embodiments provide machining capabilities for the horizontal WAAM print cells. The print robots should be able to machine barrels and domes of at least 20 feet in diameter. Mobile platforms can be incorporated to the print robots to provide machining capabilities. In some embodiments, secondary feature machining and dome machining can be achieved.

Positioners for the horizontal WAAM print cell in accordance with several embodiments can have at least one motor; or at least two motors. A greater number of motors can result in faster acceleration of build plate rotation. Acceleration to various a desired rotation speed that is less than the maximum rotation speed for a print can take less than about 0.1 second; less than about 0.5 second; less than about 1 second; less than about 5 seconds; less than about 10 seconds. Acceleration to a maximum rotation speed for a print can be less than about 0.1 second; less than about 0.5 second; less than about 1 second; less than about 5 seconds; less than about 10 seconds. Positioners can control rotation speed of build plates between about 0.5 ipm and about 600 ipm; or between about 0.003 rpm and about 0.75 rpm; and/or control revolution time between about 5 hours per revolution and about 45 hours per revolution. The positioners can have built-in backlash prevention functions. Positioners can be made with materials such as steel, carbon steel, stainless steel, metal alloys, metals, and combinations thereof. Positioners can be coated with paint.

In some embodiments, the horizontal WAAM cell can include slewing rings, bearings and/or ring gears. The slewing bearings are large-size rolling bearings that can accommodate axial, radial and moment loads acting either singly or in combination and in any direction. They can perform slewing (oscillating) movements as well as rotational movements. The slewing bearings can be mounted in vertical bearing arrangements or on horizontal support structures. The non-simultaneous raceway capacities for the slewing ring can be greater than or equal to about 0 pound, or less than or equal to about 0 pound axial load; greater than or equal to about 95,000 ft-pound, or less than or equal to about 95,000 ft-pound moment load; and greater than or equal to about 21,000 pounds, or less than or equal to about 21,000 pounds radial load. The tooth load capacities for the slewing ring can be greater than or equal to about 9,400 pounds, or less than or equal to about 9,400 pounds normal. The start-up friction can be less than about 34,000 ft-pound; operating friction can be less than about 34,000 ft-pound; and deflection from load of less than about 0.1 inch.

In several embodiments, the horizontal WAAM cell can include at least one riser. The risers should be strong and able to support a mass extending of at least about 12 feet from the build plate.

In many embodiments, the horizontal WAAM print cell can implement horizontal build plates to enable horizontal printing. Metal and polymer 3D printers need a smooth and flat surface to start each new print. Metal 3D printers use a metallic build plate that is typically computer numerical control (CNC) machined to achieve the appropriate surface finish (smoothness) and flatness. As the size or print diameter of a metal 3D printer increases, traditional CNC machining of the build plate to achieve desired surface finish and flatness may become infeasible.

The horizontal WAAM print cell in accordance with certain embodiments can print metal structures of at least 20 feet in diameter. Building horizontal build plates using traditional CNC machining presents a significant challenge. In many embodiments, the horizontal build plates can use the machining capabilities of the metal 3D printing robot itself to achieve the required surface finish and flatness on a reusable build plate. The scale of the build plate may be constrained only by the reach of the print cell robot. The base of the build plate is constructed as a large welded assembly with loose control over the flatness and smoothness. In several embodiments, the reusable build plate can be mounted onto the positioner. In a number of embodiments, the reusable build plate can include multiple CNC machined sections that form an annular metal surface. In some embodiments, the in-cell CNC machining capabilities of the metal 3D print robots can machine the reusable build plate to the desired surface finish and flatness which may be verified by a laser scanner and/or dial indicator. At the conclusion of a print operation, the robots can machine the base of the completed part to separate it from the build plate in accordance with certain embodiments. The 3D print robots can then machine the excess material from the previous part away from the reusable build plate and prepare the surface for the next operation.

Horizontal build plates in accordance with various embodiments can remove dimensional constraints associated traditional CNC machines and enable construction of larger scale horizontal metal 3D printing systems. The horizontal build plates can increase speed of print cell construction and part production by not relying on large scale external machining operations for build plate construction or between print operations.

In several embodiments, horizontal build plates are rotatable to be compatible with the horizontal meridian print position(s). The horizontal build plate should be able to support print of barrel sections of at least 20 feet long and at least 20 feet in diameter, and a full dome structure at the end of the barrel section of at least 20 feet in maximum diameter. At about 20 feet in diameter, the overall downward deflection due to the build plate rigidity shall be less than about 0.025 inch or less than about 0.020 inch. The horizontal build plates can have the following capabilities: a) allow for access for print, part removal, part flip and/or part reinstall operations; b) support loads of a positioner emergency stop; c) interface with slewing bearing specified in positioner assembly; d) have an interface for weld current brushes or equivalent component; e) constructed out of steel sections welded to make fabrication manageable; f) machined work surfaces should allow for a clocking feature for part re-install or flip; g) machined work surfaces should have features that allow for concentric alignment; h) assembly shall have surface of at least 20 feet diameter flat enough for printing operations.

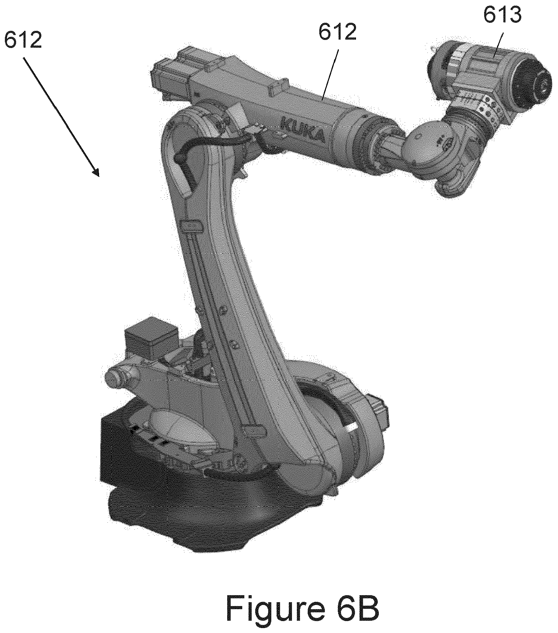

Figure 6B illustrates a print robot with various end effector assemblies in accordance with an embodiment of the invention. The print robot 611 can have an extendible arm 612. The extendible arm 612 of the robot 611 can position the end effector assembly 613 to any desired location for printing and/or processing in horizontal WAAM systems. Examples of end effector assembly 613 can include (but are not limited to) print tools, print heads, print torches, weld torches, machining heads, inspection tools, monitoring tools, and/or imaging tools.

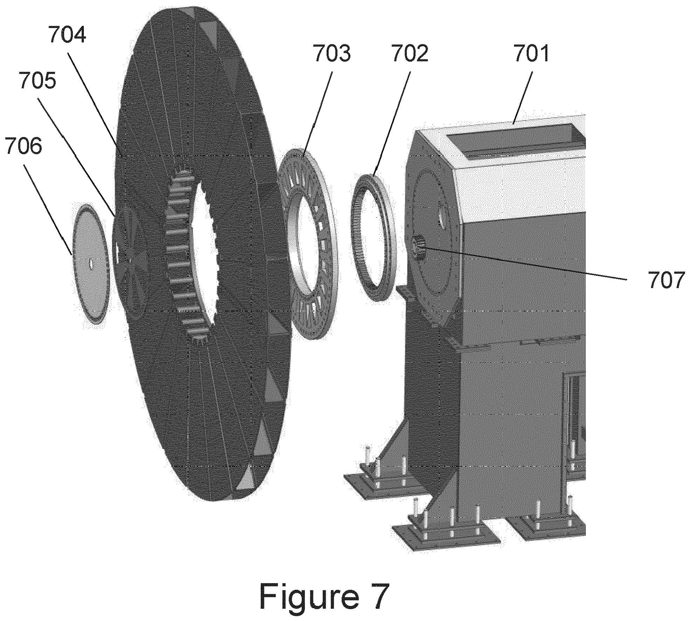

Figure 7 illustrates a positioner overview for a horizontal WAAM print cell in accordance with an embodiment of the invention. A positioner structure 701 can have a servo assembly 707 on one surface that connects to the build plate 704. A slew ring 702 and an interfacing plate 703 can be used to hold the build plate 704 onto the positioner 701. Solid center interface plate 703 can engage with weld current path brushes and bolts to the slew ring 702. A center mount encoder and bracket 705 can be positioned in the center of the build plate 704 connecting with the drive system 706. Rotation speed of the servo assembly 707 can control rotation speed of the build plate 704.

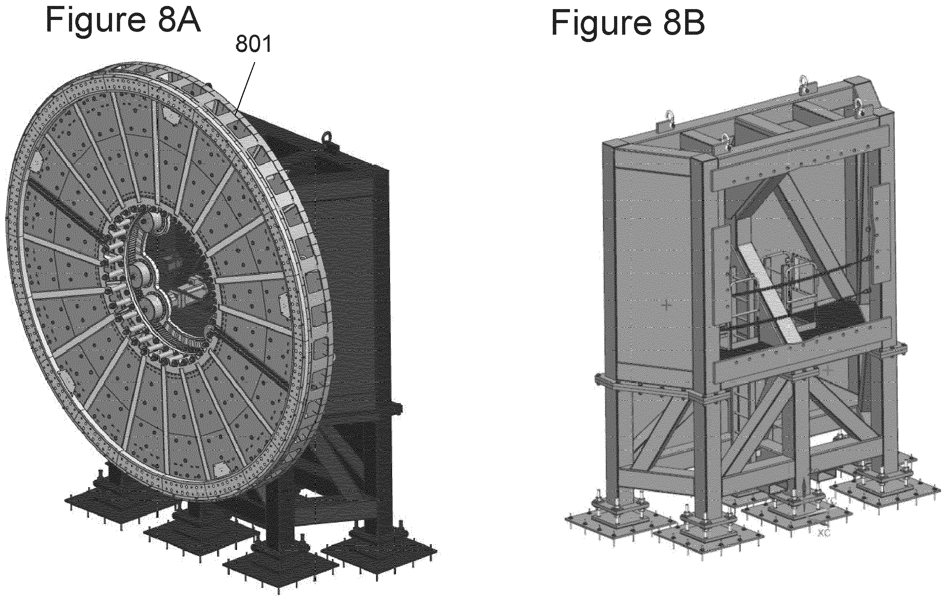

Figure 8A illustrates a build plate on a positioner for a horizontal WAAM print cell in accordance with an embodiment of the invention. Figure 8B illustrates a positioner for a horizontal WAAM print cell in accordance with an embodiment of the invention. The positioner can hold one build plate for horizontal printing. Build plate 801 can be assembled using multiple section pieces and the pieces can be machined and boltedtogether. A plurality of about 12-inch-high aluminum I-beams may be used between front and rear plating. Solid center interface ring can engage with weld current path brushes and bolts to the slew ring.

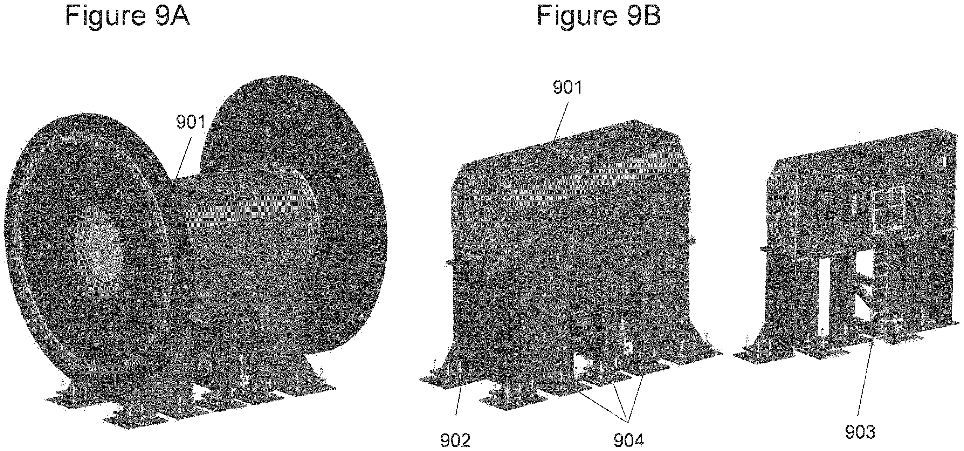

Figure 9A illustrates two build plates on a positioner for a horizontal WAAM print cell in accordance with an embodiment of the invention. Figure 9B illustrates a positioner for dual build plates for a horizontal WAAM print cell in accordance with an embodiment of the invention. The positioner 901 can hold two build plates and two horizontal print cells on opposite end for horizontal printing. Two build plates can be operated individually for example at different rotation speed. Two build plates can have individual drive systems to control their operations. Machined plate 902 in positioners 901 has high interface flatness and comprises drive systems and bearings. Machined plate 902 can be shimmed onto welded assembly. Access ladder 903 can be embedded in positioners 901 to allow access. Threaded leveling feet 904 can enable calibration and leveling of positioners 901.

### Linear Track Configuration of Horizontal WAAM Systems

Horizontal WAAM systems can have various configurations. Several embodiments include at least one horizontal WAAM print cell in the horizontal WAAM system. In some embodiments, multiple horizontal WAAM print cells can operate simultaneously. Certain embodiments have one to four, or more than four, horizontal WAAM print cells operating side by side. Each horizontal WAAM print cell can have various configurations. In some embodiments, print robots can include various types of WAAM printing robots. In a number of embodiment, print robots can be supported with fixed rails, manually guided vehicles (MGVs), and/or autonomously guided vehicles (AGVs). In several embodiments, horizontal WAAM systems can include print robots on fixed rails; print robots on fixed rail and on MGVs or powered pusher mover; print robots on fixed rails and on AGVs; print robots on multiple MGVs and AGVs supported in parallel; and/or print robots on AGVs with no fixed rails. The horizontal WAAM capabilities include (but are not limited to) outside mold line (OML) printing, inside mold line (IML) printing, dome printing, secondary feature printing, OML machining, IML machining, dome machining, secondary feature machining, series printing, and/or parallel printing.

In many embodiments, the linear track configuration can have any number of horizontal WAAM print cells operating side by side. The print cells of the linear track configuration can have robots supported on fixed rails. In several embodiments, the robots can include at least one end effector including (but not limited to) print heads, machining heads, inspection tools, monitoring tools, and/or imaging tools. Print parts can be supported on the horizontal build plate. The horizontal build plate can rotate clockwise and/or counter clockwise relative to the robots on the fixed rails. Robots can have an arm that can travel and allow the robots to reach a sufficient area of the build plate and work on the rotating part. Robots can perform tool change to switch out various end effectors. The various end effectors enable the horizontal WAAM systems to perform various tasks including (but not limited to) material deposition, calibration, tool changes, detailed machining operations, part inspections, and/or corrections. Horizontal WAAM capabilities include (but are not limited to) OML printing, IML printing, dome printing, OML machining, IML machining, and series printing. The horizontal WAAM system with print robots on fixed rails can print a maximum diameter from about 20 feet to about 24 feet.

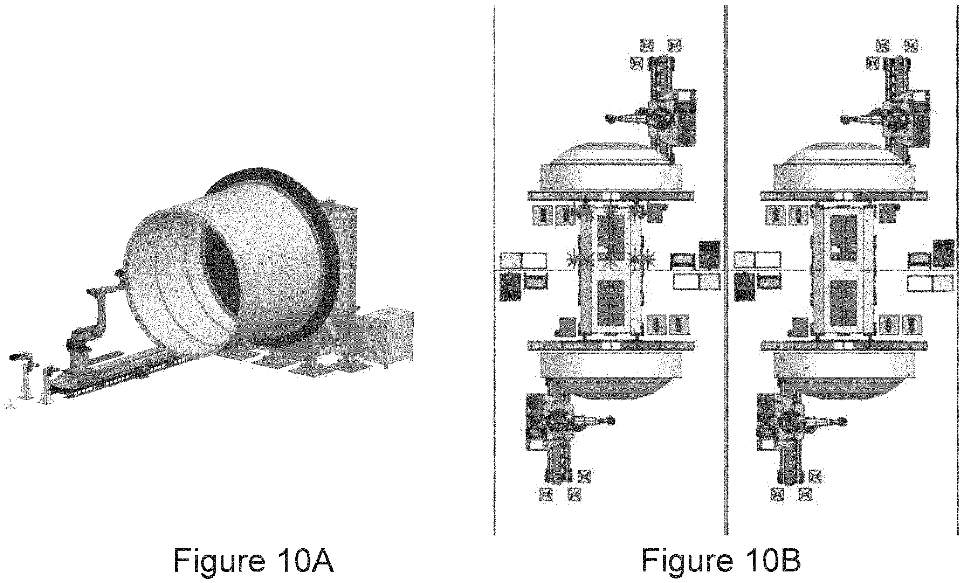

Figure 10A illustrates a horizontal print cell with a print robot on a fixed linear track in accordance with an embodiment. Each horizontal print cell can be about 38 feet by 61 feet in size; or greater than about 38 feet by 61 feet in size; or less than about 38 feet by 61 feet in size. Each horizontal WAAM print cell of the linear track configuration can print a cylinder of at least 20 feet in diameter and at least 25 feet in length.

One fixed rail can support at least one robot. The rail can be positioned for optimal reach between IML and/or OML. In some embodiments, the rails may have a travel range of about 22 feet, greater than about 22 feet, or less than about 22 feet. The rails may have about ± 0.0008-inch repeatability, and have a velocity of about 6 ft/sec, greater than about 6 ft/sec, or less than about 6 ft/sec. The robots can perform various tasks by having different end effectors including (but not limited to) print tools, machining tools, inspection tools, monitoring tools, calibration tools, and/or imaging tools. Toolchanger of the linear track configuration can enable the swap of different end effectors. Examples of end effectors include (but are not limited to) build heads (such as Fronius), spindle heads (such as HSD, HiTecho, MYL, etc.), radiographic testing (RT) arms, and non-destructive evaluation (NDE) arms. The various end effectors enable horizontal WAAM systems to perform various tasks including (but not limited to) material deposition, calibration, tool changes, detailed machining operations, part inspections, and corrections in parallel and/or sequentially.

Support rails for the robots and the various machining heads of the linear track configuration of the horizontal WAAM systems enable broad machining capabilities. Multiple support rails and robots can be set up during a print such that printing and machining can take place in parallel to expedite print processes. Robots can move machining heads around the horizontal build plate for a wider reach. In addition, different machining heads can add various machining capabilities. The linear track configuration can have automated tool change capabilities. Machine spindles can machine thin wall barrels flat. Additional machining capabilities include (but are not limited to) flange facing, about ½ inch flange holes, features less than about 50 inches past print edge of 18 feet diameter barrel, and dome flange greater than about 60 inches in diameter.

The robots can travel and reach a sufficient area of the build plate and work on the rotating part. For example, a print robot can have less than about 10 feet reach, of about 10 feet reach, and greater than about 10 feet reach. In some embodiments, a print robot can have about ± 0.003-inch repeatability, and may have a velocity of about 10 inch/sec; greater than about 10 inch/sec; or less than about 10 inch/sec. The print robots and the horizontal rails can have reduced backlash. Machining accuracy of each horizontal WAAM print cell of configuration 1 can achieve at least 0.04-inch accuracy and about 0.003-inch repeatability.

Support rails for print robots and various print heads of the linear track configuration of the horizontal WAAM systems enable flexible printing capabilities. Robots have arms that can travel and move the print heads around the horizontal build plate. In addition, different print heads offer various print capabilities. The print robots in accordance with several embodiments can print large-scale and complex objects including (but not limited to) large barrels with build features such as (but not limited to) ribs and domes overhangs. Printed barrels can have a diameter of at least 18 feet. Horizontal print cells can also support barrels that have less than about 8 feet in diameter with adapter plates. Printed parts can have a dome shape. Printed internal ribs can be less than about 40 inches from print edge. Print robots can use any combo of cold and/or hot wire deposition heads (See, e.g., U.S. Provisional Patent Application No. 63/371838, filed August 18, 2022, and U.S. Patent Application Publication No. 2023/0173601 A1, published June 8, 2023; the disclosures of which are incorporated by reference), and can have weaving, RSI, x-restarts, contact to work distance (CTWD) control capabilities. X-restarts can include the end effector automatically aligning itself to an x-axis, as explained in U.S. Provisional Patent Application No. 63/378,975, filed October 10, 2022, U.S. Provisional Patent Application No. 63/488,435, filed March 3, 2023, and U.S. Provisional Patent Application No. 63/493683, filed March 31, 2023, the disclosures of each which are incorporated by reference. Printed external ribs can be anywhere along an 18 feet barrel. Raceway tabs can be anywhere along an 18 feet barrel. Internal reach for features such as iso/ortho grids can be less than 40 inches from print edge.

The linear track configuration of the horizontal WAAM systems in accordance with some embodiments can have support systems regarding (but not limited to) usability features and safety features. The linear track configuration usability features may include (but are not limited to) automated head swaps; side and front camera views of weld; manually adjustable camera view with spindle head; in-situ laser measurements; robot, welder, spindle, and environmental sensors; X-restarts capabilities; remote restarts; part removal and re-installation via bridge crane. Safety features of the linear track configuration may include (but are not limited to) proximity sensor to ensure safe tool swaps, accessible E-stops (x4), stack lights noting system state, local machine guarding, local arc protection, and easy access for consumable swaps, filing, and/or part cleaning.

Figure 10B illustrates a system of multiple horizontal print cells with print robots on linear tracks in accordance with an embodiment. Figure 10B shows that multiple horizontal WAAM print cells can be set up side by side. Positioners with dual build plates can host two horizontal print cells on opposite ends. Multiple positioners can be laid out such that parallel printing can take place to improve print efficiency. The print cells can be operated individually, and perform the same and/or different print jobs. Each cell has safety enclosures such as (but not limited to) fencing and local arc/machine guarding. Horizontal print cells can have setups to mitigate environmental influence such as from wind, exhausts, fans, and/or other machinery. The operational support equipment can be located behind each cell. Although four horizontal print cells are illustrated in Figure 10B, it should be appreciated that single or multiple horizontal print cells can be implemented in horizontal print systems.

### Hybrid Configuration of Horizontal WAAM Systems

Horizontal WAAM systems can be a hybrid configuration that includes robots on linear rails and mobile robots. Robots can be secured to linear rails in horizontal print cells. The linear rail may move print robots along the fixed rail during printing. Several embodiments provide mobile platforms that can be precisely positioned within the print cell to achieve desired print results. Mobile platforms can contain many, and in some embodiments, all things needed for a given print operation within reach of robots of various end effectors. The mobile systems enable manufacturing capabilities without kinematic constrains of fixed rails. Print robots of horizontal WAAM print cells can be supported by fixed rails, manually guided vehicles (MGVs), and/or powered pusher movers. MGVs can be mobile platforms that support various parts to perform horizontal printing. MGVs can host a variety of components such as (but not limited to) various robots (printing, machining, inspection, imaging, etc.), robots with various end effectors, connecting systems, power systems, scanning and feedback systems. MGVs can move around the work area and be controlled manually. Compared to linear track configurations, the hybrid configuration can have better machine specialization by leveraging separate mobile support vehicles and/or carts. Hybrid configuration can have increased workable area and increased flexibility. Due to better mobility, hybrid configurations can achieve print accuracy of less than or equal to about 0.04 inches. Mobile platforms can work in parallel with robots on fixed rails. Work capabilities of the hybrid configurations may include (but are not limited to): OML printing; IML printing; dome printing; secondary feature printing; OML machining; IML machining; dome machining; secondary feature machining; series printing; and/or parallel printing.

Hybrid configurations of the horizontal WAAM systems can have increased workable areas and increased printing capabilities than linear track configurations. Mobile systems can move robots around the workable areas for better reach for printing, machining, inspection, and so on. In addition, different print heads offer various print capabilities. Hybrid configurations in accordance with several embodiments can print large-scale objects with complex features due to increased workable areas and print capabilities.

Many embodiments implement MGVs in hybrid configuration of horizontal WAAM systems. MGVs can support various types of print robots, machining robots, and any robots that may be needed to perform horizontal printing. MGVs can also include platforms such as connecting systems, power systems, scanning and feedback systems. MGVs are mobile and can be moved around and controlled manually. MGVs in accordance with several embodiments have advantages including (but not limited to) better machine specialization and/or optimization, increased workable area, increased flexibility, comparable accuracy, increased stiffness, and reduced system downtime. Design considerations of MGVs may include:
- MGVs can include different types of end effectors such as print heads and machining heads such that the robots are capable of both printing (hot and cold wire process) and machining about 18-20 feet diameter parts;
- MGVs are mobile platforms and can be positioned at an optimized position to perform majority of operations at centerline of part (about 13.3 feet above the ground); and/or able to operate on the right side and in front of prints in horizontal WAAM systems;
- Robots on MGVs can perform tool changes that are able to change tools without the need for relocating MGVs;
- MGVs have a control system to manage the overall to minimize the number of relocations needed per print;
- Robots of MGVs can be placed in stiff positions for machining operations;
- MGVs are modular and are able to reconfigure and modify as development progresses;
- Various systems on MGVs can be connected via umbilical to the rest of print cells;
- MGVs should be mechanically stable so they would not tip under any load case; or move under vibe loads caused by machining; or slip or tip under seismic loads;
- Deflection in MGVs should account for no more than 10% of the (0.00001 inch/pound) of deflection of robots.

In some embodiments, print robots can be supported on the MGVs. A maximum length of the MGV with print robot can be about 12 feet and 6 inches, and a width can be about 11 feet. The print robot on MGV contains all equipment onboarded needed for printing. Machining equipment may be connected externally.

Several embodiments provide tool change capabilities with the hybrid configuration of horizontal WAAM systems. Tool change capabilities enable the hybrid configuration to perform multiple tasks with the same robot, expediting the print speed and flexibility.

Mobile platforms in accordance with some embodiments can be manufacturing platforms comprising an autonomous manufacturing robots, tools and consumables necessary for the manufacturing process, support and inspection tooling, and methods of precisely locating the mobile platforms within a horizontal print cell as to best position it for the intended operation. A custom or off-the-shelf autonomously guided vehicle ("AGV") can lift and position the mobile platforms using a combination of coarse laser surveying or other precision locating methods. AGVs can place mobile platforms and then are free to move about the factory and execute additional operations. Keeping AGVs and mobile platform as separate systems can reduce cost and bulk of the mobile platform.

Mobile platforms in accordance with many embodiments can solve the suboptimal reach issues associated with linear rail constraints in horizontal WAAM 3D print systems. Removing rail systems allows to manufacture larger 3D printed metal structures at a higher rate with higher accuracy in the printed product by positioning the mobile platform in the optimal place for a given operation. Centralizing the manufacturing robot and its tools and consumables to the mobile platforms may avoid delays associated with tool changes and part inspections that cause operation stoppages.

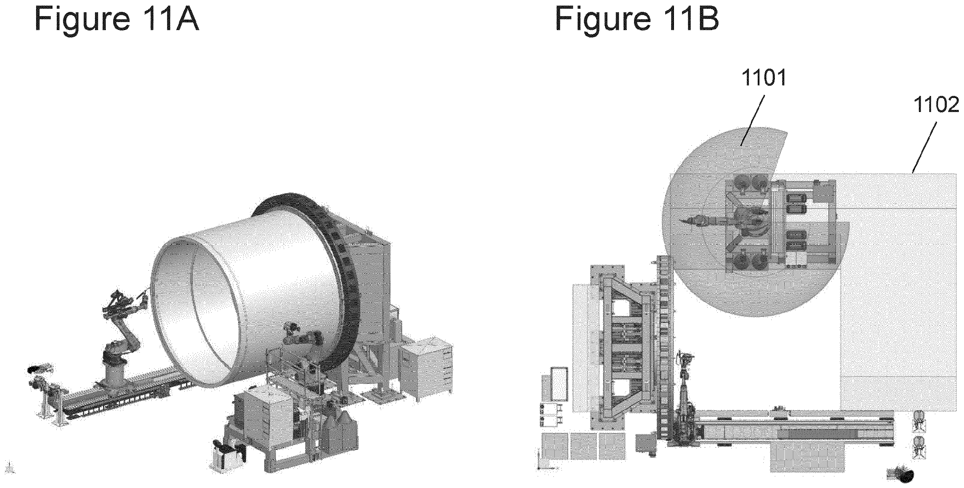

Figures 11A through 11C illustrate a hybrid configuration of a horizontal print system in accordance with an embodiment. Horizontal WAAM print cell of the hybrid configuration can have two print robots, one robot on a fixed rail and the other robot on an MGV. The fixed rail can be similar as the rail in the linear track configuration. Robots on linear rails and mobile platforms can carry out the print job in parallel. The robots can work on different parts of the print part. The printed barrel may have a diameter of at least 18 feet. The print object can dome into greater than about 50 inches and/or less than about 50 inches closing diameter. Printing and/or machining can take place anywhere along a print due to the increased mobility of the hybrid configuration. The print robots can be relocatable manually or automatically. The print robots can have automated head and are capable of tool changes. Open-loop accuracy of the print can be of about 0.04 inches; less than about 0.04 inches; and greater than about 0.04 inches. Print robot can be raised above the ground level. The height off the ground can be optimized for:
- print volume: can print a barrel of at least 18 feet in diameter without needing to be moved; may only need to be moved 1-3 times per print;
- machining position stiffness;
- interior reach: can reach about 65 - 85 inches inside a dome.

Figure 11B shows that robots on mobile platforms (MGVs and/or AGVs) have a wider range of movement than robots attached to a rail. Position of the mobile platforms can affect the reach of the robots. The robots can have extendible arms. Circular shadows 1101 show the reach of robots. Rectangular shadows 1102 show the movement range of the mobile platform.

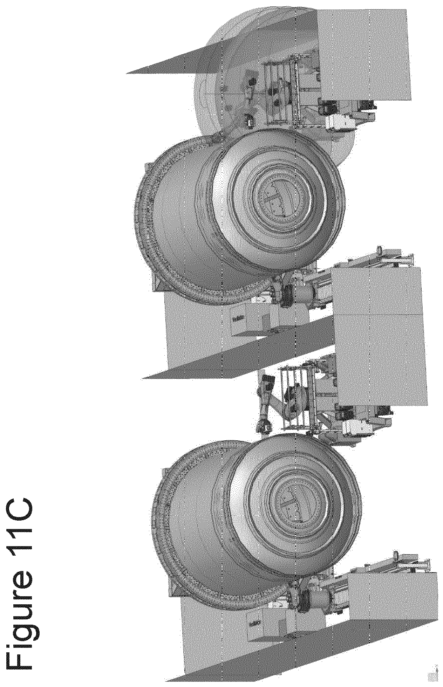

Figure 11C shows multiple horizontal print systems of hybrid configuration can be set up side by side to print in parallel. Although two hybrid horizontal systems are illustrated in Figure 11C, it should be appreciated that any number of horizontal WAAM print cells of hybrid configuration can operate simultaneously.

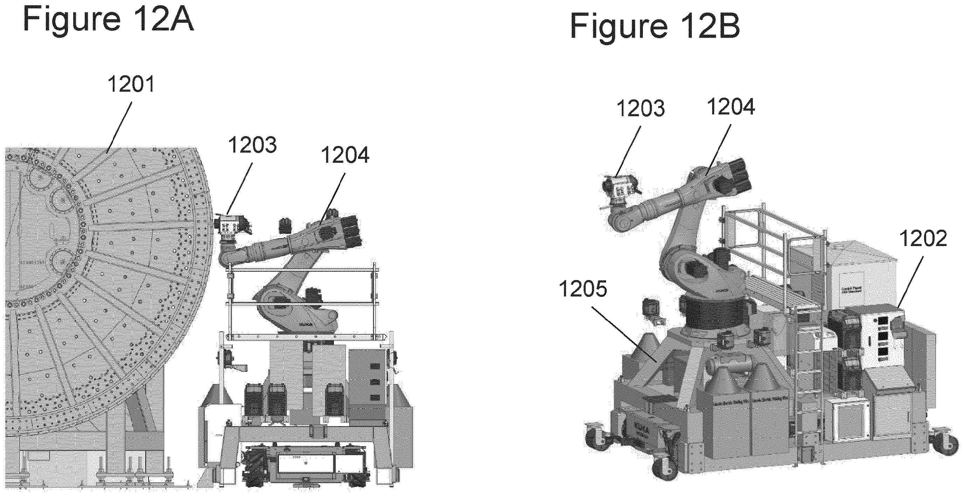

Figures 12A 12B illustrate a close up view of print robots on mobile platforms in accordance with an embodiment. Print robot 1204 can be located on a mobile platform 1205. Control systems and/or support components 1202 for the print robot 1204 can also be located on the mobile platform 1205. The print robot 1204 can have an end effector assembly 1203 with tool change capabilities. The end effector assembly 1203 can be attached on an extendible arm of the robot 1204 in order to position the end effector assembly 1203 to any desired location for printing and/or processing in horizontal WAAM systems. The mobile platform 1205 can be a manually guided vehicle or an autonomously guided vehicle.

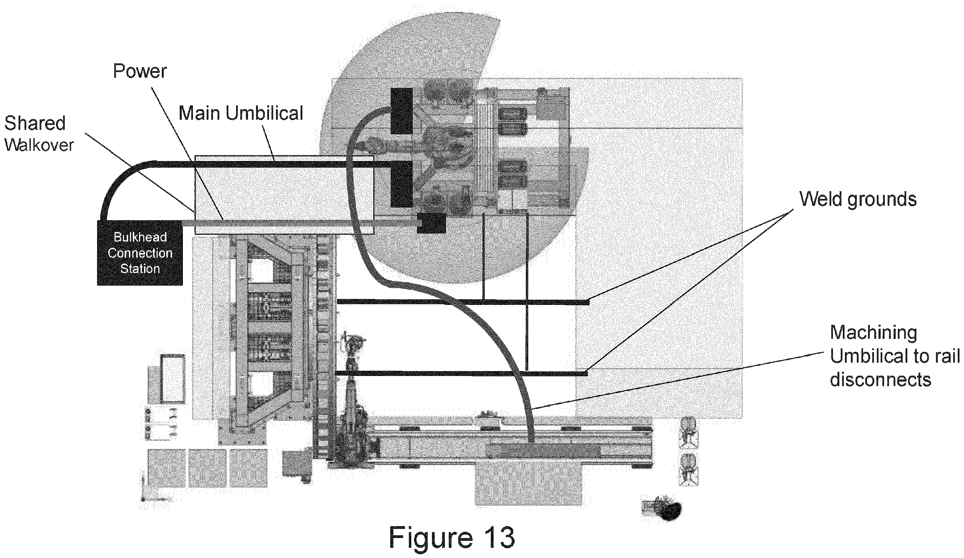

Figure 13 illustrates an umbilical strategy for cable management in accordance with an embodiment. Figure 13 shows a hybrid configuration of a horizontal print system with a print robot on a fixed linear rail and a print robot on a mobile platform. The umbilical strategy enables equipment of the hybrid configuration is interconnected.

In horizontal WAAM systems, various components such as (but not limited to) power, networking, data, weld equipment, and machining equipment can be connected. The umbilical strategy in accordance with several embodiments can be used to simplify cable management. When the system is connected, the robots and/or mobile platforms can be located to desired positions. The approximate location of the print can be dictated by the operation and communicated to path planner. Mobile platforms (MGVs or AGVs) can be controlled by giving them the positioner position coordinates and/or axis. Localization of robots and/or mobile platforms can be achieved using devices including (but not limited to) laser trackers and/or permanent cell fiducials. The position of the mobile platforms and/or robots with respect to permanent cell fiducials may be located using an on-board non-contact tracker. The robots can perform coordinate transformation of points in real-time. Calibration verification can be performed at the same time. Control software can pre-run the robot path. When the robots are moved into desired location (using MGVs or AGVs), print can start.

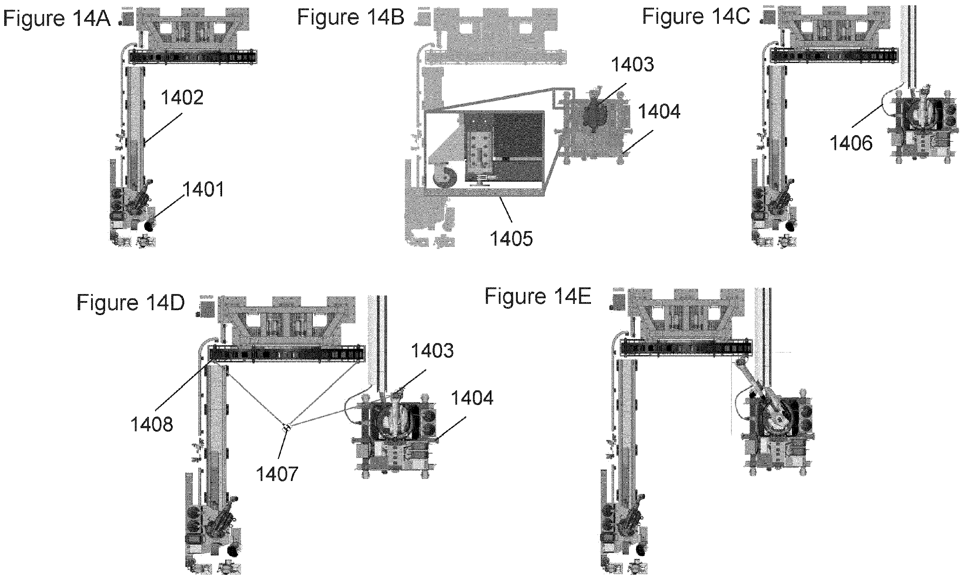

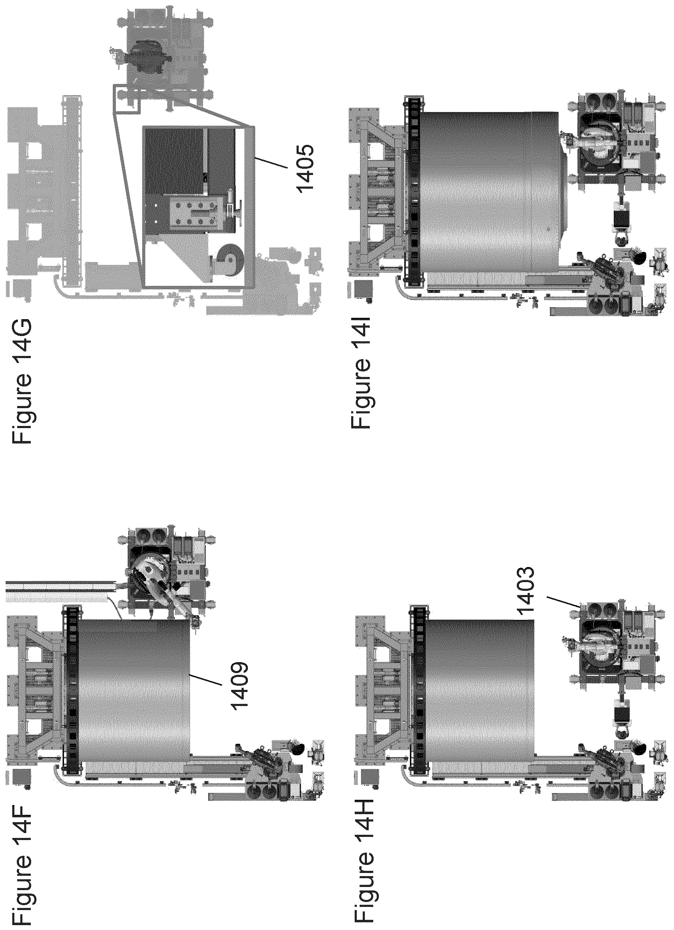

Figure 14 illustrates a workflow of a hybrid configuration of a horizontal print system in accordance with an embodiment. Figure 14A illustrates a print robot 1401 can be moved into the horizontal WAAM system on a linear rail 1402. The robot 1401 can be moved on the rail 1402 using equipment such as (but not limited to) powered pusher movers (such as Master Mover MT1000+). Figure 14B shows a second print robot 1403 on a mobile platform 1404. The feet 1405 of the mobile platform 1404 can be lowered. Figure 14C shows that the umbilical 1406 is connected. Figure 14D illustrates a laser tracking system 1407 including (but not limited to) laser sources, cameras, markers, that can localize the position of the second robot 1403 (and the mobile platform 1404) in relation to the build plate 1408. Laser facilitated localization can be achieved using devices including (but not limited to) AT 960 laser tracker and permanent cell fiducials. Figure 14E shows that print starts after the print robots are correctly located. Once the object is printed, the print may stop. Figure 14F illustrates the print of a barrel 1409 (such as 18 feet long barrel) can be achieved at the end of the print. The umbilical can then be disconnected. Figure 14G shows the feet 1405 of the mobile platforms can be raised. The mobile print robot 1403 can be moved into next position as shown in Figure 14H. Figure 14I illustrates the print process can repeat again.

### Mobile Configuration of Horizontal WAAM Systems

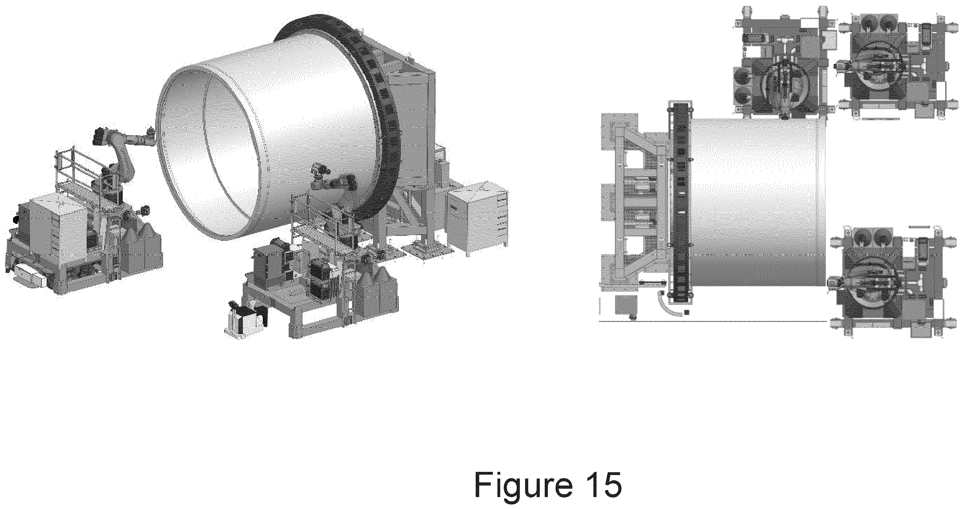

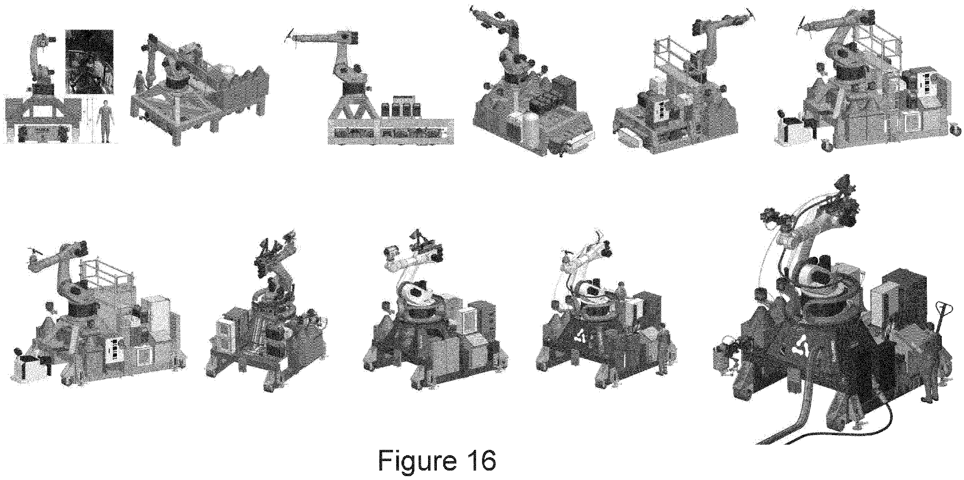

Deposition rates can be slower if processes and/or deposition are performed in serial. Many embodiments implement a decentralized architecture allowing for heterogeneous agents to self-allocate their tasks including (but not limited to) printing, inspection, and/or machining. Fully mobile configuration of horizontal WAAM systems can include multiple mobile horizontal WAAM print cells. Multiple mobile horizontal WAAM print cells can operate simultaneously. In several embodiments, the mobile configuration can include multiple MGVs, AGVs, and multiple robots, working in parallel. In some embodiments, multiple robots can be controlled for parallelizing operations or printing of complex features. One benefit of parallelizing operations is load balancing to optimize manufacturing times. This configuration can be applied to horizontal welding, which can allow multiple robots to be put anywhere to print a long horizontal structure. Figure 15 illustrates a mobile configuration of a horizontal WAAM system with multiple mobile cells in accordance with an embodiment of the invention. Figure 16 illustrates various configurations of mobile platforms for print robots. Mobile platforms can be manually guided vehicles or autonomously guided vehicles.

### DOCTRINE OF EQUIVALENTS

As can be inferred from the above discussion, the above-mentioned concepts can be implemented in a variety of arrangements in accordance with embodiments of the invention. Accordingly, although the present invention has been described in certain specific aspects, many additional modifications and variations would be apparent to those skilled in the art. It is therefore to be understood that the present invention may be practiced otherwise than specifically described. Thus, embodiments of the present invention should be considered in all respects as illustrative and not restrictive. Notably, all references to WAAM in this application are provided as an example and should not be construed as limiting. The inventive concepts in this application are applicable to any Directed Energy Deposition (DED) 3d printing process. Appropriate feedstocks include powder or wire. Relevant energy sources are plasma, arc, laser, and others.

As used herein, the singular terms "a," "an," and "the" may include plural referents unless the context clearly dictates otherwise. Reference to an object in the singular is not intended to mean "one and only one" unless explicitly so stated, but rather "one or more."

As used herein, the terms "approximately" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

### Example Clauses

### Examples are set out in the following clauses:

1. A wire arc additive manufacturing system comprising:
   a build plate defining a vertically oriented build plane and having a center point and a build axis oriented perpendicular to the build plane, wherein the build plate is configured to rotate on the build axis about center point; and
   at least one robot comprising at least one print head configured to deposit a molten material onto the build plate in a series of layers disposed along the build axis to form a part.
2. The system of clause 1, wherein the build plate rotates at a speed from 0.5 inch per minute to 600 inch per minute.
3. The system of clause 1 or 2, further comprising a positioner, wherein the build plate is attached to the positioner and a motor on the positioner drives the build plate to rotate.
4. The system of any preceding clause, wherein the build plate has a circular shape and a diameter from 5 feet to 18 feet.
5. The system of any preceding clause, wherein the print head is placed at a position at 90-degree or 270-degree from a top of the build plate circumferentially around the center point.
6. The system of clause 5, wherein a build plate rotation speed and a print head deposition rate are coordinated such that the print head is at a constant location during printing.
7. The system of any preceding clause, wherein the print head is positioned at one end of an extendable arm of the at least one robot such that the print head extends to reach a desired location to print.
8. The system of any preceding clause, wherein the at least one robot is mounted on a rail arranged in a print direction such that the rail moves the at least one robot as the part prints.
9. The system of any preceding clause, wherein the at least one robot is mounted on a first mobile platform comprising a riser; wherein the at least one robot moves freely horizontally and vertically.
10. The system of clause 9, further comprising a laser tracking system to position the at least one robot at a desired location for printing.
11. The system of clause 9 or 10, wherein the mobile platform is a manually guided vehicle or an autonomously guided vehicle.
12. The system of any preceding clause, further comprising a second robot supported on a second mobile platform comprising a riser; wherein the second robot moves freely horizontally and vertically.
13. The system of clause 12, wherein the second robot comprises an end effector assembly configured to attach a tool selected from the group consisting of: a print tool, a weld tool, a machining tool, an inspection tool, and an imaging tool.
14. The system of clause 12 or 13, wherein the second mobile platform is a manually guided vehicle or an autonomously guided vehicle.
15. The system of any preceding clause, wherein the part has a cylindrical shape or a dome shape.
16. The system of any preceding clause, further comprising a second build plate defining a vertically oriented build plane and having a center point and a build axis oriented perpendicular to the second build plane, wherein the second build plate is configured to rotate on the build axis about center point; and a third robot comprising at least one print head configured to deposit a molten material onto the second build plate in a series of layers disposed along the build axis to form a second part.
17. The system of clause 16, wherein the second build plate rotates at a speed from 0.5 inch per minute to 600 inch per minute.
18. The system of clause 16 or 17, wherein the build plate and the second build plate align along the build axis, the build plane of the build plate faces an opposite direction from the build plane of the second build plate.
19. The system of any of clauses 16 to 18, wherein the third robot is mounted on a rail arranged in a print direction such that the rail moves the third robot as the second part prints.
20. The system of any of clauses 16 to 19, wherein the third robot is mounted on a mobile platform comprising a riser; wherein the third robot moves freely horizontally and vertically.

## Claims

1. A wire arc additive manufacturing system comprising:
a build plate defining a vertically oriented build plane and having a center point and a build axis oriented perpendicular to the build plane, wherein the build plate is configured to rotate on the build axis about center point; and
at least one robot comprising at least one print head configured to deposit a molten material onto the build plate in a series of layers disposed along the build axis to form a part.

2. The system of claim 1, wherein the build plate rotates at a speed from 0.5 inch per minute to 600 inch per minute.

3. The system of claim 1 or 2, further comprising a positioner, wherein the build plate is attached to the positioner and a motor on the positioner drives the build plate to rotate.

4. The system of any preceding claim, wherein the build plate has a circular shape and a diameter from 5 feet to 18 feet.

5. The system of any preceding claim, wherein the print head is placed at a position at 90-degree or 270-degree from a top of the build plate circumferentially around the center point.

6. The system of claim 5, wherein a build plate rotation speed and a print head deposition rate are coordinated such that the print head is at a constant location during printing.

7. The system of any preceding claim, wherein the print head is positioned at one end of an extendable arm of the at least one robot such that the print head extends to reach a desired location to print.

8. The system of any preceding claim, wherein the at least one robot is mounted on a rail arranged in a print direction such that the rail moves the at least one robot as the part prints.

9. The system of any preceding claim, wherein the at least one robot is mounted on a first mobile platform comprising a riser; wherein the at least one robot moves freely horizontally and vertically; wherein the mobile platform is a manually guided vehicle or an autonomously guided vehicle.

10. The system of claim 9, further comprising a laser tracking system to position the at least one robot at a desired location for printing.

11. The system of any preceding claim, further comprising a second robot supported on a second mobile platform comprising a riser; wherein the second robot moves freely horizontally and vertically.

12. The system of claim 11, wherein the second robot comprises an end effector assembly configured to attach a tool selected from the group consisting of: a print tool, a weld tool, a machining tool, an inspection tool, and an imaging tool.

13. The system of claim 11 or 12, wherein the second mobile platform is a manually guided vehicle or an autonomously guided vehicle.

14. The system of any preceding claim, wherein the part has a cylindrical shape or a dome shape.

15. The system of any preceding claim, further comprising a second build plate defining a vertically oriented build plane and having a center point and a build axis oriented perpendicular to the second build plane, wherein the second build plate is configured to rotate on the build axis about center point; and a third robot comprising at least one print head configured to deposit a molten material onto the second build plate in a series of layers disposed along the build axis to form a second part;
wherein the second build plate rotates at a speed from 0.5 inch per minute to 600 inch per minute;
wherein the build plate and the second build plate align along the build axis, the build plane of the build plate faces an opposite direction from the build plane of the second build plate;
wherein the third robot is mounted on a rail arranged in a print direction such that the rail moves the third robot as the second part prints; and
wherein the third robot is mounted on a mobile platform comprising a riser; wherein the third robot moves freely horizontally and vertically.
